# EUROPÄISCHE PATENTANMELDUNG

(11) **EP 0 896 411 A2**
(43) Veröffentlichungstag der Anmeldung: **10.02.1999**
(21) Anmeldenummer: 98112214.6
(22) Anmeldetag: 02.07.1998
(51) Int. Cl.: H02H 7/085

(54) **Elektrischer Stellantrieb insbesondere zum Bewegen von Fenster- und Türflügeln, Rolläden, Jalousien sowie Markisen**

(30) Priorität: 08.08.1997 DE 29714236 U
(71) Anmelder: Gretsch-Unitas GmbH Baubeschläge, D-71254 Ditzingen (DE)
(72) Erfinder: Renz,Walter,Dipl.-Ing.(FH), 71254 Ditzingen (DE); Münch,Gerhard, 74372 Sersheim (DE)
(74) Vertreter: KOHLER SCHMID + PARTNER

(57) **Zusammenfassung**

Im Falle eines elektrischen Stellantriebs insbesondere zum Bewegen von Fenster- und Türflügeln, Rolläden, Jalousien sowie Markisen mit wenigstens einer Wechselspannungsquelle (1) sowie wenigstens einem damit antriebsverbindbaren und mittels eines steuerbaren Motorschalters (13) schaltbaren Stellmotor (2) ist der Stellmotor (2) als Gleichspannungsmotor ausgebildet. Der Stellmotor (2) steht mit der Wechselspannungsquelle (1) über einen Gleichrichter (9) und wenigstens zwei mit letzterem in Reihe angeordnete und zueinander parallel geschaltete Leiter (7, 8) sowie wenigstens einen der Parallelschaltung (6) der Leiter (7, 8) in Reihe nachgeschalteten Kondensator (10) in Verbindung. Dabei befindet sich wenigstens einer (7) der parallelgeschalteten Leiter (7, 8) permanent in einem leitfähigen Zustand. Wenigstens ein anderer (8) der parallelgeschalteten Leiter (7, 8) ist mittels einer steuerbaren Leiterschalteinrichtung (14) in einen sperrenden oder einen leitfähigen Zustand schaltbar. Außerdem ist eine Schaltsteuerung vorgesehen, welche mit dem Kondensator (10), dem Motorschalter (13) und der Leiterschalteinrichtung (14) in Verbindung steht und den Motorschalter (13) sowie die Leiterschalteinrichtung (14) in Abhängigkeit von der Kondensatorspannung steuert.

## Beschreibung

Die Erfindung betrifft einen elektrischen Stellantrieb insbesondere zum Bewegen von Fenster- und Türflügeln, Rolläden, Jalousien sowie Markisen, mit wenigstens einer Wechselspannungsquelle sowie wenigstens einem damit antriebsverbindbaren und mittels eines steuerbaren Motorschalters schaltbaren Stellmotor.

Von derartigen Stellantrieben werden bestimmte Grundfunktionen verlangt. So muß selbstredend ein störungsfreier Betrieb gewährleistet sein und die angetriebene Einheit, beispielsweise das Oberlicht eines Fensters, problemlos bewegt werden können. Im Interesse der Betriebssicherheit muß der Stellmotor vor Überhitzung geschützt sein. Nicht zuletzt auch aus Gründen des Überhitzungsschutzes kann des weiteren dafür gesorgt werden, daß der Stellmotor selbsttätig stillgesetzt wird, sobald die angetriebene Einheit ihre Endlage erreicht oder auf ein Hindernis aufläuft, das eine weitere Bewegung blockiert.

Bekanntermaßen werden elektrische Stellantriebe mit einem Wechselstrom-Asynchronmotor verwendet. Wechselstrom-Asynchronmotoren sind jedoch in der Anschaffung verhältnismäßig teuer und bedürfen zur Bereitstellung der genannten Antriebs-Grundfunktionen aufwendiger Steuerungseinrichtungen.

Aufgabe der vorliegenden Erfindung ist es daher, Stellantriebe in ihrem Aufbau zu vereinfachen und dadurch insbesondere auch zu verbilligen.

Erfindungsgemäß erreicht wird dieses Ziel dadurch, daß im Falle eines elektrischen Stellantriebs der eingangs genannten Art der Stellmotor als Gleichspannungsmotor ausgebildet ist und mit der Wechselspannungsquelle über einen Gleichrichter und wenigstens zwei mit letzterem in Reihe angeordnete und zueinander parallel geschaltete Leiter sowie wenigstens einen der Parallelschaltung der Leiter in Reihe nachgeschalteten Kondensator in Verbindung steht, wobei sich wenigstens einer der parallelgeschalteten Leiter permanent in einem leitfähigen Zustand befindet und wenigstens ein anderer der parallelgeschalteten Leiter mittels einer steuerbaren Leiterschalteinrichtung in einen sperrenden oder einen leitfähigen Zustand schaltbar ist und daß eine Schaltsteuerung vorgesehen ist, welche mit dem Kondensator, dem Motorschalter und der Leiterschalteinrichtung in Verbindung steht und den Motorschalter sowie die Leiterschalteinrichtung in Abhängigkeit von der Kondensatorspannung steuert. Als Gleichspannungsmotor kann ein handelsüblicher Niedervolt-Gleichstrommotor verwendet werden. Diese Motorenbauart zeichnet sich durch niedrige Anschaffungskosten sowie durch einen konstruktionsbedingten Überhitzungsschutz aus. Sie können nicht nur im Kurzzeitbetrieb sondern auch im Dauerbetrieb eingesetzt werden, ohne daß eine unzulässige Erwärmung zu befürchten wäre. Der Gleichrichter erzeugt aus der Wechselspannung der Spannungsquelle die für den Betrieb des Stellmotors benötigte Gleichspannung. Der vorstehend genannte Kondensator bewirkt eine Spannungsglättung. Dem Kondensator vorgeschaltet ist ein Vorwiderstand. Die erfindungsgemäße Schaltsteuerung schließlich gewährleistet im Zusammenwirken mit den mit ihr gekoppelten Antriebsteilen auf einfache Art und Weise die Grundfunktionen des elektrischen Stellantriebs. In der Ausgangssituation, d.h. bei von der Wechselspannungsquelle getrenntem Stellmotor, befindet sich die Leiterschalteinrichtung in einer Schaltstellung, in welcher sich der oder die zugeordneten Leiter in einem sperrenden Zustand befinden. Nachdem entsprechendes für den Motorschalter gilt, kann sich der Kondensator aufladen, sobald die Wechselspannungsquelle zugeschaltet wird. Erreicht die Kondensatorspannung einen ersten Schwellenwert, so wird mittels der Schaltsteuerung die Leiterschalteinrichtung betätigt, und der oder die zuvor sperrenden Leiter gelangen nun ebenfalls in einen leitfähigen Zustand. Dies wiederum erlaubt eine Beschleunigung der Kondensatoraufladung. Erreicht nun die Kondensatorspannung einen zweiten Schwellenwert, nämlich einen Wert, der einen vorgegebenen Sollwert der Motor-Betriebsspannung repräsentiert, so wird über die Schaltsteuerung der Motorschalter leitend geschaltet, so daß ein von dem Stellmotor aufzunehmender Strom fließen und der Stellmotor anlaufen kann. Bei Erreichen bzw. Überschreiten des Sollwertes der Motor-Betriebsspannung wird über die Schaltsteuerung die Leiterschalteinrichtung betätigt und dabei der oder die dieser zugeordneten Leiter in einen sperrenden Zustand geschaltet. Die Kondensatornachladung wird nunmehr, d.h. bei Betrieb des Stellmotors, zunächst lediglich noch über den oder die permanent leitfähigen Leiter der Leiter-Parallelschaltung bewerkstelligt. Sinkt die Kondensatorspannung bzw. die Motor-Betriebsspannung unter den Sollwert, so wird über die Schaltsteuerung und die damit gekoppelte Leiterschalteinrichtung der oder die zuvor sperrend geschalteten Leiter erneut in einen leitfähigen Zustand überführt, bis sich an dem Kondensator wieder die Sollspannung aufgebaut hat. Auf die beschriebene Art und Weise wird die Kondensatorspannung während des Motorbetriebs mit Hilfe der Schaltsteuerung geregelt. Dabei bleibt der Motorschalter auch bei Unterschreiten des Sollwertes der Kondensatorspannung bzw. der Stellmotor-Betriebsspannung in seiner dem Stellmotor eine Stromaufnahme ermöglichenden Schaltstellung. Von der Verwendung aufwendiger und teurer Schaltnetzteile oder Netztransformatoren kann erfindungsgemäß abgesehen werden. Die Kondensatorspannung ist im Sinne der Erfindung bei Betrieb des Stellmotors ein Maß für die an diesem anliegende Betriebsspannung.

Als Motorschalter ist in bevorzugter Ausgestaltung der Erfindung ein Thyristor vorgesehen, dessen Anoden-Kathoden-Strecke in Reihe mit dem Stellmotor angeordnet ist und an dessen Steuerelektrode die Kondensatorspannung oder eine diese repräsentierende Spannung als Thyristorsteuerspannung anliegt. Bei Thyristoren handelt es sich um kleinbauende, störungssichere und in der Anschaffung preisgünstige Schalter, die ohne weiteres dazu in der Lage sind, die im Rahmen des erfindungsgemäßen Stellantriebes an sie gestellten Anforderungen zu erfüllen. Beispielsweise bleibt der verwendete Thyristor, nachdem er einmal leitend geschaltet worden ist, so lange stromdurchlässig, bis er von der Spannungsquelle getrennt wird. Im Interesse eines einfachen Aufbaus der Gesamtanordnung wird die Kondensatorspannung auch als Steuerspannung bzw. als Ausgangsspannung für die Erzeugung der Steuerspannung des Thyristors genutzt.

Um dies zu ermöglichen, ist erfindungsgemäß vorgesehen, daß die Schaltsteuerung einen Spannungsteiler für die Thyristorsteuerung umfaßt mit der Kondensatorspannung als Eingangs- und der Thyristorsteuerspannung als Ausgangsspannung.

Der Einfachheit halber ist dabei der Spannungsteiler für die Thyristorsteuerung als parallel zu dem Kondensator angeordnete Reihenschaltung von wenigstens zwei ohmschen Widerständen ausgebildet.

Eine weitere Ausführungsform des erfindungsgemäßen Stellantriebes ist dadurch gekennzeichnet, daß die Schaltsteuerung einen Steuerkreis zur Steuerung der Leiterschalteinrichtung umfaßt mit wenigstens einem Konstantspannungserzeuger, wenigstens einem strombetätigten Steuerglied für die wenigstens eine Leiterschalteinrichtung sowie wenigstens einem Transistor, dessen Emitter-Kollektor-Strecke in Reihe mit dem strombetätigten Steuerglied für die Leiterschalteinrichtung angeordnet ist, wobei an dem Emitter des Transistors die Spannung des Konstantspannungserzeugers und an der Basis des Transistors die Kondensatorspannung oder eine diese repräsentierende Spannung als Transistorsteuerspannung anliegt. Bei dem erfindungsgemäßen Transistor handelt es sich ebenso wie bei dem vorstehend beschriebenen Thyristor um ein bewährtes elektronisches Bauteil, dessen Verwendung einen lediglich geringen Aufwand bedingt und das die von ihm geforderten Funktionen ohne weiteres übernehmen kann. Ob der Transistor leitend ist oder nicht, hängt von dem Verhältnis seiner Emitter- sowie seiner Basisspannung ab. Nachdem erfindungsgemäß die Emitterspannung konstant gehalten ist, wird der Leitfähigkeits- bzw. Sperrzustand des Transistors ausschließlich von der Basisspannung und im vorliegenden Fall somit von der Kondensatorspannung bestimmt. Dieser Umstand eröffnet die Möglichkeit, das in Reihe mit der Emitter-Kollektor-Strecke des Transistors geschaltete Steuerglied für die Leiterschalteinrichtung in Abhängigkeit von der an dem Kondensator anliegenden Spannung zu betätigen und dadurch abhängig von der Kondensatorspannung über die Leiterschalteinrichtung den oder die der Leiterschalteinrichtung zugeordneten Leiter in einen sperrenden oder in einen leitfähigen Zustand zu überführen.

In Weiterbildung der Erfindung ist als Konstantspannungserzeuger eine parallel zu dem Kondensator angeordnete Zenerdiode vorgesehen. Bekanntermaßen ändert sich an leitenden Zenerdioden die Spannung mit dem Strom allenfalls äußerst geringfügig. In Verbindung mit einem Vorwiderstand sind Zenerdioden daher für die Verwendung zur Spannungsstabilisierung prädestiniert.

Eine einfache Möglichkeit der Steuerung des Transistors in Abhängigkeit von der Kondensatorspannung wird erfindungsgemäß dadurch realisiert, daß der Steuerkreis einen Spannungsteiler für die Transistorsteuerung umfaßt mit der Kondensatorspannung als Eingangs- und der Transistorsteuerspannung als Ausgangsspannung.

Der Einfachheit halber ist der Spannungsteiler für die Transistorsteuerung dabei als parallel zu dem Kondensator angeordnete Reihenschaltung von wenigstens zwei ohmschen Widerständen ausgebildet.

Als Steuerglied für die Leiterschalteinrichtung ist zweckmäßigerweise wenigstens eine Leuchtdiode und als Leiterschalteinrichtung wenigstens eine optisch mit der (den) Leuchtdiode(n) gekoppelte Leiterschaltdiode vorgesehen. Auch die Verwendung dieser Bauteile geht im wesentlichen auf Wirtschaftlichkeitsüberlegungen zurück.

Ist der Gleichrichter des erfindungsgemäßen Stellantriebes den mittels der Leiterschalteinrichtung schaltbaren Leitern nachgeordnet und fließt in den genannten Leitern dementsprechend ein Wechselstrom, so empfiehlt es sich, als Leiterschaltdiode eine Triacdiode vorzusehen.

Im Interesse einer einfachen Funkentstörung ist die Leiterschaltdiode erfindungsgemäß als Nullpunktschalter ausgebildet.

Aus dem gleichen Grund ist erfindungsgemäß vorgesehen, daß der betreffende Leiter mittels der zugeordneten Leiterschaltdiode jeweils für die Dauer einer Halbwelle der Wechselspannung der Wechselspannungsguelle in einen leitfähigen Zustand schaltbar ist.

Damit der Stellmotor selbsttätig stillgesetzt wird, sobald die von ihm angetriebene Einheit, beispielsweise ein Fensterflügel, ihre Endlage erreicht oder auf ein die weitere Bewegung blockierendes Hindernis auftrifft, weist der Steuerkreis zur Steuerung der Leiterschalteinrichtung des erfindungsgemäßen Stellantriebes zweckmäßigerweise einen spannungsgesteuerten Steuerkreisschalter auf, mittels dessen der Steuerkreis in Abhängigkeit von der Kondensatorspannung in einen sperrenden oder einen leitfähigen Zustand schaltbar ist. Auch in diesem Fall ist die Kondensatorspannung ein Maß für die an dem Stellmotor anliegende Spannung. Erreicht beispielsweise ein mittels des Stellmotors angetriebener Fensterflügel seine Schließlage und wird der Flügel dadurch an einer weiteren Bewegung gehindert, so nimmt die Stromaufnahme des Stellmotors drastisch zu. Entsprechend entwickelt sich der Stromfluß durch die dem Kondensator vorgeschaltete Leiter-Parallelschaltung bzw. durch den dem Kondensator vorgeschalteten Vorwiderstand. Infolgedessen kommt es an dem Vorwiderstand des Kondensators zu einem stark erhöhten Spannungsabfall, was wiederum dazu führt, daß auch die Kondensatorspannung drastisch abnimmt. Läuft der Flügel zu einem Zeitpunkt in seine Endstellung ein, zu dem lediglich der oder die permanent leitfähige bzw. leitfähigen Leiter einen Stromfluß erlauben, so erreicht die Kondensatorspannung zunächst den Schwellenwert, bei welchem über die Leiterschalteinrichtung der oder die dieser zugeordnete bzw. zugeordneten Leiter in einen leitfähigen Zustand geschaltet wird bzw. werden. Auch über diese oder diesen Leiter fließt dann aufgrund der hohen Stromaufnahme des Stellmotors ein Strom großer Stärke, der auch in dem zugeschalteten Leiter bzw. an einem diesem zugeordneten Widerstand einen starken Spannungsabfall bewirkt und damit zu einem weiteren Spannungsabfall an dem Kondensator beiträgt. Die Kondensatorspannung erreicht schließlich einen Schwellenwert, bei welchem der spannungsgesteuerte Steuerkreisschalter betätigt wird und den Steuerkreis unterbricht. Infolgedessen kann die Leiterschalteinrichtung nicht mehr angesteuert werden und der oder die der Leiterschalteinrichtung zugeordnete bzw. zugeordneten Leiter werden in einen sperrenden Zustand überführt, den sie anschließend beibehalten. Ein Stromfluß ist nunmehr lediglich noch über den oder die permanent leitfähigen Leiter möglich. Aus der Reduzierung der Anzahl der zur Verfügung stehenden leitfähigen Leiter resultiert ein weiterer Abfall der Kondensator- und somit der Motorspannung. Mit der Verminderung der Kondensator- bzw. der Motorspannung einher geht eine Verminderung des von dem Stellmotor aufgenommenen Stromes, bis schließlich lediglich noch ein sehr kleiner Strom fließt, der zwar nicht für den Motorbetrieb, wohl aber zum Geschlossenhalten des Motorschalters bzw. Thyristors ausreicht. Der Motorschalter bleibt somit leitend und der Stellmotor im Stillstand, ohne von der Wechselspannungsquelle getrennt zu sein. Die geringe Stromaufnahme des Stellmotors bedingt eine allenfalls geringfügige, keinesfalls aber schädliche Wärmeentwicklung. Gleichzeitig wird an dem Stellmotor ein, wenn auch kleines Motormoment erzeugt, welches ausreicht, die von dem Stellmotor angetriebene Einheit an dem auf diese wirkenden Anschlag zu halten. So wird beispielsweise ein in seine Schließ-Endlage bewegter Fensterflügel mit einer Kraft an den festen Rahmen gedrückt, die ausreicht, ein unerwünschtes Öffnen des Flügels etwa durch auf diesen ausgeübten Winddruck zu verhindern.

Bevorzugtermaßen ist der Steuerkreisschalter erfindungsgemäßer Stellantriebe als in Reihe mit dem Steuerglied für die Leiterschalteinrichtung angeordnete Steuerkreisschaltdiode ausgebildet. Das Schalten der Steuerkreisschaltdiode in Abhängigkeit von der Kondensatorspannung wird dabei dadurch bewerkstelligt, daß die Reihenschaltung mit Steuerkreisschaltdiode und Steuerglied für die Leiterschalteinrichtung parallel zu dem Kondensator angeordnet ist.

Auch als Steuerkreisschaltdiode ist erfindungsgemäß vorteilhafterweise eine Zenerdiode vorgesehen.

Nachstehend wird die Erfindung anhand der schematischen Wiedergabe einer beispielhaften Schaltung näher erläutert.

Die Darstellung zeigt eine Wechselspannungsguelle 1 sowie einen daran betriebenen Stellmotor 2. Bei der Wechselspannungsquelle 1 handelt es sich um das Wechselspannungsnetz (230 V, 50 Hz), als Stellmotor 2 findet ein Gleichstrom-Niederspannungsmotor mit einer Nennspannung von 40 V Verwendung. Der Stellmotor 2 dient zum Öffnen und Schließen eines Oberlichtes.

Zwischen die Wechselspannungsguelle 1 und den Stellmotor 2 geschaltet sind Netzschalter 3, 4, ein Vorwiderstand 5 in Form eines ohmschen Widerstandes (60 Ω), eine Parallelschaltung 6 zweier Leiter 7, 8, ein als herkömmlicher Brückengleichrichter ausgebildeter Gleichrichter 9, ein Kondensator 10, der von zwei parallel geschalteten Einzelkondensatoren 11, 12 gebildet wird sowie ein Motorschalter in Form eines Thyristors 13. Die Verwendung zweier Einzelkondensatoren 11, 12 anstelle eines einzigen entsprechend ausgelegten Kondensators hat Platzgründe. So beanspruchen die beiden Einzelkondensatoren 11, 12 eine geringere Bauhöhe als ein einziger Kondensator entsprechender Kapazität.

Der Leiter 8 der Parallelschaltung 6 ist mittels einer Leiterschalteinrichtung 14, bestehend aus zwei Triacdioden 15, 16, wahlweise in einen sperrenden oder einen leitfähigen Zustand schaltbar. Zur Steuerung der Leiterschalteinrichtung 14 dient ein Steuerglied 17 mit zwei Leuchtdioden 18, 19, die mit den Triacdioden 15, 16 der Leiterschalteinrichtung 14 optisch gekoppelt sind.

Der Leiter 7 beinhaltet zwei zueinander parallel geschaltete Widerstände 31, 32, wobei der Widerstand 31 als Kondensator (0,5 µF, 250 V Wechselspannung) und der Widerstand 32 als ohmscher Widerstand (100 kΩ) ausgebildet ist. Entsprechend umfaßt der Leiter 8 eine Parallelschaltung von vier Widerständen 33, 34, 35, 36, wobei es sich bei den Widerständen 33 und 35 jeweils um einen Kondensator (2,2 µF, 250 V Wechselspannung) und bei den Widerständen 34, 36 jeweils um einen ohmschen Widerstand (100 kΩ) handelt. Die Widerstände 32, 34, 36 dienen dem Berührschutz, indem sie die Kondensatoren 31, 33 und 35 nach Trennen der Schaltung von der Wechselspannungsquelle 1 entladen.

Das Steuerglied 17 ist Teil eines Steuerkreises, der außerdem eine parallel zu dem Kondensator 10 geschaltete erste Zenerdiode 20 (Sperrspannung 24 V), einen Transistor 21 mit einer Basis B, einem Emitter E und einem Kollektor C sowie eine in Reihe mit dem Transistor 21 angeordnete zweite Zenerdiode 22 (Sperrspannung 10 V) umfaßt. Zwischen die zweite Zenerdiode 22 und das Steuerglied 17 für die Leiterschalteinrichtung 14 ist ein Widerstand 23 in Form eines weiteren ohmschen Widerstandes (1 kΩ) geschaltet.

In Reihe mit der ersten Zenerdiode 20 ist ein ebenfalls als ohmscher Widerstand ausgebildeter Vorwiderstand 24 (1 kΩ) angeordnet. An der Basis B des Transistors liegt die Transistorsteuerspannung an, die mittels eines Spannungsteilers 25 für die Transistorsteuerung aus der Kondensatorspannung des Kondensators 10 erzeugt wird und daher eine die Kondensatorspannung und somit die Spannung des Stellmotors 2 repräsentierende Spannung darstellt. Der Spannungsteiler 25 für die Transistorsteuerung ist als parallel zu dem Kondensator 10 angeordnete Reihenschaltung zweier ohmscher Widerstände 26 (10 kΩ) und 27 (22 kΩ) ausgebildet.

An dem Emitter E des Transistors 21 liegt die Spannung der ersten Zenerdiode 20 an. Die Reihenschaltung aus der Emitter E -Kollektor C -Strecke des Transistors 21, der zweiten Zenerdiode 22, dem Widerstand 23 sowie dem Steuerglied 17 der Leiterschalteinrichtung 14 ist parallel zu dem Kondensator 10 angeordnet.

In Reihe mit dem Stellmotor 2 ist die Anoden-Kathoden-Strecke des Thyristors 13 geschaltet. An dessen Steuerelektrode liegt als Thyristorsteuerspannung eine die Spannung des Kondensators 10 repräsentierende Spannung an, die mittels eines Spannungsteilers 28 für die Thyristorsteuerung aus der Kondensatorspannung erzeugt wird. Der Spannungsteiler 28 für die Thyristorsteuerung umfaßt dabei eine parallel zu dem Kondensator 10 angeordnete Reihenschaltung von zwei ohmschen Widerständen 29 (27 kΩ) und 30 (560 Ω).

Ein Varistor 37 (250 V) dient ebenso wie Varistoren 38 (250 V), 39 (250 V) und 40 (40 V) der Funkentstörung des Stellantriebes. Bei einer Diode 41 handelt es sich um eine Schutzdiode für den Thyristor 13. Über Relais 42, 43 läßt sich die Laufrichtung des Stellmotors 2 steuern. Parallel zu den Triacdioden 15, 16 geschalteten ohmschen Widerständen 44, 45 (24 kΩ) fällt die Aufgabe zu, für eine gleichmäßige Verteilung der Spannung auf die Triacdioden 15, 16 zu sorgen.

Es ergibt sich folgende Funktionsweise des gezeigten Stellantriebs:

In der Ausgangssituation, d.h. bei von der Wechselspannungsguelle 1 getrenntem Stellmotor 2, sind die Triacdioden 15, 16 der Leiterschalteinrichtung 14 gesperrt, und der Leiter 8 der Parallelschaltung 6 befindet sich dementsprechend ebenfalls in einem sperrenden Zustand. Der Leiter 7 der Parallelschaltung 6 hingegen ist permanent leitfähig. Der als Motorschalter für den Stellmotor 2 dienende Thyristor 13 ist in der Ausgangssituation stromundurchlässig.

Soll der Stellmotor 2 mit Rechtslauf betrieben werden, so ist der Netzschalter 3 zu betätigen, ein Linkslauf des Stellmotors 2 ergibt sich bei Betätigen des Netzschalters 4.

Nach Betätigen eines der beiden Netzschalter 3, 4 bleibt der Thyristor 13 zunächst gesperrt und da der Stellmotor 2 infolgedessen keinen Strom aufnehmen kann, baut sich an dem Kondensator 10 eine Kondensatorspannung auf. Dabei wird der Kondensator 10 zunächst lediglich über den Leiter 7 und insbesondere dessen Widerstand bzw. Kondensator 31 aufgeladen. Mit der Spannung des Kondensators 10 nehmen auch die an der ersten Zenerdiode 20 sowie die an der Basis B des Transistors 21 anliegenden Spannungen zu.

Sobald an der Basis B des Transistors 21 eine um etwa 0,7 V kleinere Spannung als an dem Emitter E anliegt, wird die Emitter E-Kollektor C-Strecke des Transistors 21 leitend geschaltet. Dies ist bereits der Fall, noch ehe die Sperrspannung der Zenerdiode 20 erreicht ist und wird ermöglicht durch den Spannungsteiler 25.

Ist nun aber der Transistor 21 leitend, so könnte an sich ausgehend von dessen Kollektor C ein Strom über die zweite Zenerdiode 22 und den Widerstand 23 zu den Leuchtdioden 18, 19 des Steuerglieds 17 für die Leiterschalteinrichtung 14 fließen. Dies wird jedoch von der zweiten Zenerdiode 22 zunächst verhindert und zwar so lange, bis sich an dem Kondensator 10 eine Spannung aufgebaut hat, die ausreicht, um an der zweiten Zenerdiode 22 eine Spannung anzulegen, die größer ist als die Sperrspannung der zweiten Zenerdiode 22. Ist dieser Betriebszustand erreicht, so fließt ein Strom zu den Leuchtdioden 18, 19. Dadurch werden die Leuchtdioden 18, 19 illuminiert, wodurch wiederum die mit diesen optisch gekoppelten Triacdioden 15, 16 leitend geschaltet werden. Der leitende Zustand der Triacdioden 15, 16 hält dabei jeweils für die Dauer einer von Null ausgehenden Halbwelle der Spannung der Wechselspannungsguelle 1 an. Der Leiter 8 wird dadurch ebenfalls leitfähig und bildet infolgedessen neben dem Leiter 7 einen zusätzlichen Strömungsweg für den Stromfluß zu dem Kondensator 10. Dessen Aufladung wird dadurch beschleunigt.

Sobald an dem Kondensator 10 eine Spannung erreicht wird, infolge derer die Sperrspannung der ersten Zenerdiode 20 überschritten wird, wirkt letztere als Konstantspannungserzeuger, dessen konstante Spannung an dem Emitter E des Transistors 21 anliegt. Der Transistor 21 wird nach Überschreiten der Sperrspannung der ersten Zenerdiode 20 sperrend und bleibt dies, solange die an seiner Basis B anliegende und von der Kondensatorspannung abhängige Spannung um weniger als 0,7 V kleiner ist als die an seinem Emitter E anliegende Konstantspannung. Die genannte Spannungsdifferenz von 0,7 V wird durch die gewählte Transistorbauart bedingt und ist materialspezifisch für Siliziumdioden.

Aufgrund der Sperrung des Transistors 21 fließt kein Strom zu den Leuchtdioden 18, 19, was wiederum zu einem Sperren der Triacdioden 15, 16 und damit des Leiters 8 führt. Nunmehr erfolgt die Aufladung des Kondensators 10 lediglich noch über den Leiter 7.

Im Laufe des Spannungsaufbaus an dem Kondensator 10 ergibt sich ein Spannungswert, bei dem die an der Steuerelektrode des Thyristors 13 anliegende Spannung einen Wert annimmt, bei welchem der Thyristor 13 leitend wird. Befindet sich der Thyristor 13 in einem leitenden Zustand, so ist seine Anoden-Kathoden-Strecke stromdurchlässig und der damit in Reihe geschaltete Stellmotor 2 kann Strom aufnehmen und infolgedessen anlaufen. Nachdem der Thyristor 13 einmal leitfähig geworden ist, verharrt er in diesem Zustand, bis er von der Wechselspannungsquelle 1 getrennt wird.

Nach der Anlaufphase befindet sich der Stellmotor 2 in seiner Betriebsphase, in welcher er das mit ihm verbundene Oberlicht in die gewünschte Richtung bewegt. Sinkt während dieser Betriebsphase die Spannung des Kondensators 10 unter einen bestimmten Schwellenwert bzw. die Betriebsspannung des Stellmotors 2 unter einen Sollwert, so sinkt gleichzeitig die an der Basis B des Transistors 21 anliegende Transistorsteuerspannung auf einen Wert, der etwa 0,7 V unter der an dem Emitter E des Transistors 21 anliegenden Konstantspannung liegt. Dies führt dazu, daß der Transistor 21 in der vorstehend beschriebenen Weise erneut leitend und dadurch über das Steuerglied 17 die Leiterschalteinrichtung 14 in einem den Leiter 8 leitfähig schaltenden Sinne betätigt wird. Die Triacdioden 15, 16 an dem Leiter 8 lassen dann Wechselspannungs-Halbwellen durch, bis der Kondensator 10 wieder einen Spannungszustand erreicht hat, bei welchem die Transistorsteuerspannung an der Basis B des Transistors 21 einen Wert annimmt, der weniger als 0,7 V unter der Spannung an dem Emitter E des Transistors 21 liegt. Auf diese Art und Weise sorgt der Steuerkreis mit dem Transistor 21 und dem Steuerglied 17 für die Leiterschalteinrichtung 14 für eine Regelung der Betriebsspannung des Stellmotors 2 auf einen vorgegebenen Wert. Bei dem Transistor 21 handelt es sich um einen die Betriebsspannung des Stellmotors 2 betreffenden Ist-Wert / Soll-Wert-Vergleicher. Der Stellmotor 2 kann ungeachtet der Regelung seiner Betriebsspannung Strom aufnehmen und betrieben werden, da der Thyristor 13 unabhängig von der Spannung des Kondensators 10 leitfähig bleibt, solange die Wechselspannungsquelle 1 zugeschaltet ist.

Läuft nun der mittels des Stellmotors 2 angetriebene Flügel in seine Endlage ein und wird dementsprechend die Welle des Stellmotors 2 in ihrer Drehung blockiert, so erhöht der Stellmotor 2 seine Stromaufnahme erheblich. Diese Erhöhung der Stromaufnahme durch den Stellmotor 2 führt dazu, daß der Spannungsabfall an den Widerständen in der Parallelschaltung 6 der Leiter 7, 8 ebenfalls äußerst stark zunimmt. Sowohl bei leitendem als auch bei gesperrtem Leiter 8 ergibt sich ein Spannungsabfall in der Parallelschaltung 6 in einem Ausmaß, das die Spannung an dem Kondensator 10 ebenfalls stark abfallen läßt. Befindet sich der Leiter 8 bei Erreichen der Endlage des Stellmotors 2 in sperrendem Zustand, so führt der Spannungsabfall an dem Kondensator 10 zunächst dazu, daß in der vorstehend beschriebenen Art und Weise bei gesperrter erster Zenerdiode 20 und damit verbundenem Leitendschalten des Transistors 21 der Leiter 8 leitfähig wird. Daraus aber resultiert ein großer Spannungsabfall auch in dem Leiter 8 bzw. an dessen Widerständen 33, 34, 35, 36. Infolgedessen vermindert sich die Spannung an dem Kondensator 10 weiter, bis schließlich ein Wert erreicht ist, bei dem die Spannung des Kondensators 10 nicht mehr ausreicht, die zweite Zenerdiode 22 in der parallel zu dem Kondensator 10 geschalteten Reihenschaltung der Emitter E-Kollektor C-Strecke des Transistors 21, der zweiten Zenerdiode 22, dem Widerstand 23 und dem Steuerglied 17 leitend zu halten. Infolgedessen sperrt die zweite Zenerdiode 22 und bewirkt dadurch, daß durch die Leuchtdioden 18, 19 des Steuergliedes 17 kein Strom mehr fließen kann. Von nun an kann der Stellmotor 2 einen Strom nur noch über den Leiter 7 der Parallelschaltung 6 aufnehmen. Dies führt zu einem weiteren Spannungsabfall an dem Kondensator 10. Durch Verwendung der zweiten Zenerdiode 22 im Kollektorkreis des Transistors 21 erfolgt eine verhältnismäßig frühe Abschaltung der Leuchtdioden 18, 19 und somit eine relativ frühe Sperrung des Leiters 8.

Mit dem Spannungsabfall an dem Kondensator 10 geht ein Spannungsabfall an dem Stellmotor 2 einher und damit verbunden eine Reduzierung der Stromaufnahme durch den Stellmotor 2. Im gezeigten Beispielsfall sinkt die Motorspannung auf etwa 1 V. Bei dieser Spannung nimmt der Stellmotor 2 nur noch einen äußerst kleinen Strom auf, der zum Betrieb des Stellmotors 2 bei weitem nicht ausreicht, gleichzeitig aber auch nur eine äußerst geringfügige Erwärmung des Stellmotors 2 bedingt. Der Stellmotor 2 befindet sich im Stillstand, ohne von der Wechselspannungsquelle 1 getrennt zu sein. Der aufgenommene Strom versetzt ihn in die Lage, ein kleines Motormoment aufzubringen und dadurch einer Rückstellung der Motorwelle entgegenzuwirken. Das mit der Motorwelle verbundene Oberlicht kann folglich auch gegen die Wirkung von auf dieses wirkenden Kräften in der Schließ-Endlage gehalten werden.

Ein Neuaufbau der Betriebsspannung des Stellmotors 2, d.h. der Spannung des Kondensators 10, ist nicht möglich, da der Thyristor 13 sich nach wie vor in einem leitenden Zustand befindet und der Stellmotor 2 dementsprechend zu einer dem Spannungsaufbau an dem Kondensator 10 entgegenstehenden Stromaufnahme fähig ist. Ein Neuanlaufen des Stellmotors 2 setzt dessen vollständiges Trennen von der Wechselspannungsquelle 1 voraus. Nur dadurch kann nämlich der Thyristor 13 in einen sperrenden Zustand geschaltet werden.

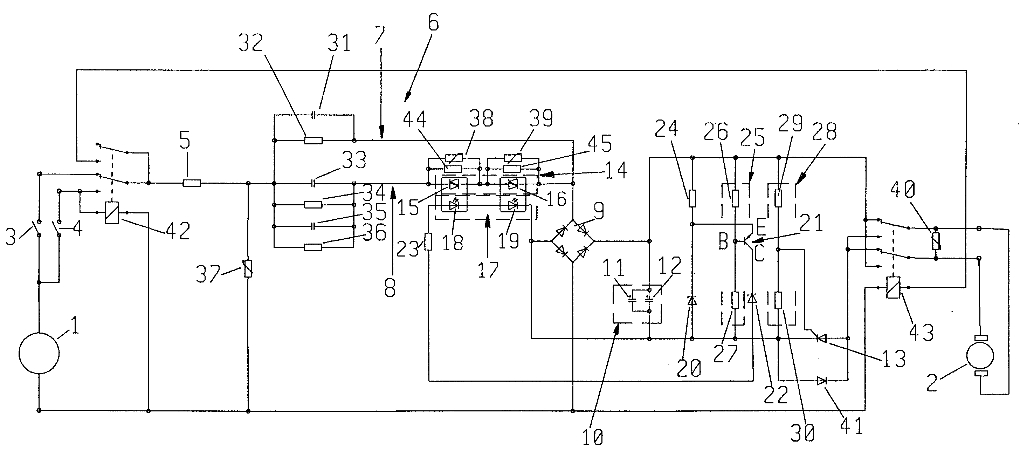

## Patentansprüche

1. Elektrischer Stellantrieb insbesondere zum Bewegen von Fenster- und Türflügeln, Rolläden, Jalousien sowie Markisen, mit wenigstens einer Wechselspannungsquelle (1) sowie wenigstens einem damit antriebsverbindbaren und mittels eines steuerbaren Motorschalters (13) schaltbaren Stellmotor (2), dadurch gekennzeichnet, daß der Stellmotor (2) als Gleichspannungsmotor ausgebildet ist und mit der Wechselspannungsquelle (1) über einen Gleichrichter (9) und wenigstens zwei mit letzterem (9) in Reihe angeordnete und zueinander parallel geschaltete Leiter (7, 8) sowie wenigstens einen der Parallelschaltung (6) der Leiter (7, 8) in Reihe nachgeschalteten Kondensator (10) in Verbindung steht, wobei sich wenigstens einer (7) der parallelgeschalteten Leiter (7, 8) permanent in einem leitfähigen Zustand befindet und wenigstens ein anderer (8) der parallelgeschalteten Leiter (7, 8) mittels einer steuerbaren Leiterschalteinrichtung (14) in einen sperrenden oder einen leitfähigen Zustand schaltbar ist und daß eine Schaltsteuerung vorgesehen ist, welche mit dem Kondensator (10), dem Motorschalter (13) und der Leiterschalteinrichtung (14) in Verbindung steht und den Motorschalter (13) sowie die Leiterschalteinrichtung (14) in Abhängigkeit von der Kondensatorspannung steuert.

2. Elektrischer Stellantrieb nach Anspruch 1, dadurch gekennzeichnet, daß als Motorschalter ein Thyristor (13) vorgesehen ist, dessen Anoden-Kathoden-Strecke in Reihe mit dem Stellmotor (2) angeordnet ist und an dessen Steuerelektrode die Kondensatorspannung oder eine diese repräsentierende Spannung als Thyristorsteuerspannung anliegt.

3. Elektrischer Stellantrieb nach einem der vorhergehenden Ansprüche, dadurch gekennzeichnet, daß die Schaltsteuerung einen Spannungsteiler (28) für die Thyristorsteuerung umfaßt mit der Kondensatorspannung als Eingangs- und der Thyristorsteuerspannung als Ausgangsspannung.

4. Elektrischer Stellantrieb nach einem der vorhergehenden Ansprüche, dadurch gekennzeichnet, daß der Spannungsteiler (28) für die Thyristorsteuerung als parallel zu dem Kondensator (10) angeordnete Reihenschaltung von wenigstens zwei ohmschen Widerständen (29, 30) ausgebildet ist.

5. Elektrischer Stellantrieb nach einem der vorhergehenden Ansprüche, dadurch gekennzeichnet, daß die Schaltsteuerung einen Steuerkreis zur Steuerung der Leiterschalteinrichtung (14) umfaßt mit wenigstens einem Konstantspannungserzeuger, wenigstens einem strombetätigten Steuerglied (17) für die wenigstens eine Leiterschalteinrichtung (14) sowie wenigstens einem Transistor (21), dessen Emitter (E) - Kollektor (C) - Strecke in Reihe mit dem strombetätigten Steuerglied (17) für die Leiterschalteinrichtung (14) angeordnet ist, wobei an dem Emitter (E) des Transistors (21) die Spannung des Konstantspannungserzeugers und an der Basis (B) des Transistors (21) die Kondensatorspannung oder eine diese repräsentierende Spannung als Transistorsteuerspannung anliegt.

6. Elektrischer Stellantrieb nach einem der vorhergehenden Ansprüche, dadurch gekennzeichnet, daß als Konstantspannungserzeuger eine parallel zu dem Kondensator (10) angeordnete Zenerdiode (20) vorgesehen ist.

7. Elektrischer Stellantrieb nach einem der vorhergehenden Ansprüche, dadurch gekennzeichnet, daß der Steuerkreis einen Spannungsteiler (25) für die Transistorsteuerung umfaßt mit der Kondensatorspannung als Eingangs- und der Transistorsteuerspannung als Ausgangsspannung.

8. Elektrischer Stellantrieb nach einem der vorhergehenden Ansprüche, dadurch gekennzeichnet, daß der Spannungsteiler (25) für die Transistorsteuerung als parallel zu dem Kondensator (10) angeordnete Reihenschaltung von wenigstens zwei ohmschen Widerständen (26, 27) ausgebildet ist.

9. Elektrischer Stellantrieb nach einem der vorhergehenden Ansprüche, dadurch gekennzeichnet, daß als Steuerglied (17) für die Leiterschalteinrichtung (14) wenigstens eine Leuchtdiode (18, 19) und als Leiterschalteinrichtung (14) wenigstens eine optisch mit der (den) Leuchtdiode(n) (18, 19) gekoppelte Leiterschaltdiode vorgesehen ist.

10. Elektrischer Stellantrieb nach einem der vorhergehenden Ansprüche, dadurch gekennzeichnet, daß als Leiterschaltdiode eine Triacdiode (15, 16) vorgesehen ist.

11. Elektrischer Stellantrieb nach einem der vorhergehenden Ansprüche, dadurch gekennzeichnet, daß die Leiterschaltdiode als Nullpunktschalter ausgebildet ist.

12. Elektrischer Stellantrieb nach einem der vorhergehenden Ansprüche, dadurch gekennzeichnet, daß der betreffende Leiter (8) mittels der zugeordneten Leiterschaltdiode jeweils für die Dauer einer Halbwelle der Wechselspannung der Wechselspannungsquelle (1) in einen leitfähigen Zustand schaltbar ist.

13. Elektrischer Stellantrieb nach einem der vorhergehenden Ansprüche, dadurch gekennzeichnet, daß der Steuerkreis zur Steuerung der Leiterschalteinrichtung (14) einen spannungsgesteuerten Steuerkreisschalter aufweist, mittels dessen der Steuerkreis in Abhängigkeit von der Kondensatorspannung in einen sperrenden oder einen leitfähigen Zustand schaltbar ist.

14. Elektrischer Stellantrieb nach einem der vorhergehenden Ansprüche, dadurch gekennzeichnet, daß der Steuerkreisschalter als in Reihe mit dem Steuerglied (17) für die Leiterschalteinrichtung (14) angeordnete Steuerkreisschaltdiode ausgebildet und die Reihenschaltung mit Steuerkreisschaltdiode und Steuerglied (17) für die Leiterschalteinrichtung (14) parallel zu dem Kondensator (10) angeordnet ist.

15. Elektrischer Stellantrieb nach einem der vorhergehenden Ansprüche, dadurch gekennzeichnet, daß die Steuerkreisschaltdiode als Zenerdiode (22) ausgebildet ist.
